# EUROPEAN PATENT SPECIFICATION

(11) **EP 2 055 509 B1**
(45) Date of publication and mention of the grant of the patent: **18.12.2013**
(21) Application number: 07119870.9
(22) Date of filing: 02.11.2007
(51) Int. Cl.: B60G 17/005, B60G 17/04, B62D 55/084, B62D 55/116

(54) **Suspension system having hydraulic equalizer bar control**
Aufhängungssystem mit hydraulischer Steuerung eines Querträgers
Système de suspension ayant une commande traverse pendulaire hydraulique

(43) Date of publication of application: 06.05.2009
(73) Proprietor: CATERPILLAR INC., Peoria IL 61629-6490 (US)
(72) Inventor: Barriol Pierre, 38360 Sassenage (FR)
(74) Representative: Hatzmann, Martin

(56) References cited:
- EP-A- 0 921 095
- EP-B- 0 544 666
- DE-A1- 19 535 443
- DE-C- 565 212
- GB-A- 2 172 858
- NL-C2- 1 017 727
- US-A- 3 976 302
- US-A- 4 046 209
- US-A- 4 582 153
- US-A1- 2003 015 488
- US-B1- 6 173 973

## Description

### Technical Field

The present disclosure is directed to a suspension system, in particular to a suspension system having hydraulic equalizer bar control.

### Background

Machines having traction devices that generally extend front to back, for example track type machines, are known to experience traction problems on uneven soil conditions when the traction devices are rigidly coupled to the frame. Larger machines therefore commonly include an equalizer bar that interconnects the front parts of opposing traction devices. The equalizer bar may be pivotally connected to the machine frame and may allow a rocking movement of the front parts of the traction devices, so that the traction devices may follow the soil on uneven terrain. This allows productivity of the machine to be maintained under rough soil conditions.

When the machine is on smooth soil, however, the equalizer bar may complicate operation of the machine, and may cause excessive vibration of the machine. Especially when driving the machine on soil with close ridges, or when the machine is driven on the road, heavy machine pitch may occur that is uncomfortable for the operator and that increases wear on the machine.

To address this issue, it has been proposed to mechanically lock the equalizer bar to the machine frame, so that it may be manually switched between a configuration with fixed traction devices or rockable traction devices. A machine which includes such a lockable equalizer bar is the Caterpillar Pipe layer 561N. In this machine, flanges with bolt holes have been provided on the frame and on the equalizer bar, which may be locked together via a locking bolt when the bolt holes are aligned in the neutral position of the equalizer bar. Although this machine alleviates the issue significantly, it still has disadvantages. These disadvantages are associated with the aspect of manually switching the configuration. That is, switching the configuration may be a relatively cumbersome operation, which, in practice, causes the machine to be used constantly in either the rigid or rockable configuration. Further, even when locked, the locked equalizer bar may still cause significant vibration. NL 1 017 727 discloses a suspension system and a method according to the preamble of claims 1 and 12, which also may cause vibration.

The disclosed suspension system is directed at alleviating one or more of the disadvantages set forth above. Thereto a suspension system and method is provided in accordance with claims 1 and 12.

### Summary of the Invention

One aspect of the present disclosure is directed to a suspension system for a machine having an equalizer bar that interconnects opposing traction devices extending generally front to back along a frame of the machine. The system includes at least one hydraulic component acting between the equalizer bar and the frame, and at least one valve fluidly connected to the at least one hydraulic component. The at least one valve is in use controlled to influence fluid flow to the actuator in order to selectively allow movement of the equalizer bar relative to the frame.

Another aspect of the disclosure is directed to a method of controlling a suspension system of a machine having an equalizer bar that interconnects two opposing traction devices extending along a frame of the machine. The method comprises influencing a flow of hydraulic fluid in the suspension system in order to selectively allow movement of the equalizer bar relative to the frame.

### Brief Description of the Drawings

Fig. 1 is an isometric illustration of an exemplary disclosed machine;

Fig. 2 is a schematic illustration of an exemplary disclosed suspension system that may be used with the machine of Fig. 1;

Fig. 3 is a flow chart illustrating an exemplary disclosed method of controlling the suspension system of Fig. 2; and

Fig. 4 is a flow chart illustrating another exemplary disclosed method of controlling the suspension system of Fig. 2.

### Detailed Description.

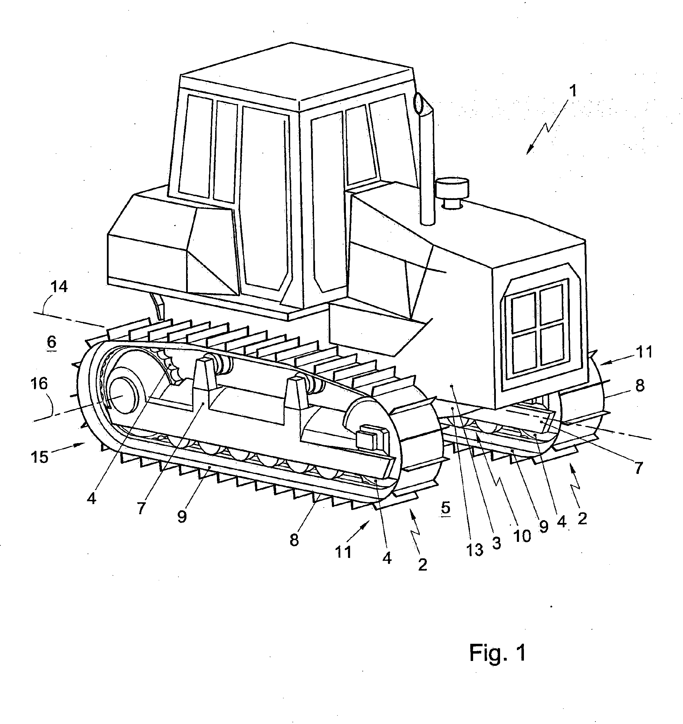

Fig. 1 shows an embodiment of a machine 1 having two opposing traction devices 2 that extend generally front to back along the frame 3 of the machine 1. The term 'generally extending front to back' is in this specification meant to express the general direction in which the traction devices 2 extend along the frame 3, that is to say that the traction devices 2 do not necessarily extend fully or exactly from the back to the front the machine 1. The machine 1 may for example be a bulldozer, a track loader, a motor grader or a skid steer loader. The machine 1, as shown in Fig. 1, is a bulldozer. The machine 1 may be propelled by any drive arrangement (not shown), which may typically be a pair of opposing drive shafts. In one embodiment, the drive shafts may for example be arranged to drive sprockets 4 at a back end of the traction device 2. The traction device 2 may rigidly connect sprockets 4 at a front end 5 of the machine 1 to the sprockets 4 at the rear end 6 of the machine 1. Each traction device 2 may include a track roller frame 7 carrying track elements 8 that are interconnected to form an endless drive track 9 around the sprockets 4 at the front end 5 and rear end 6 of one side of the machine 1, as shown in the exemplary disclosed embodiment of Fig. 1. In this example, the drive shafts may be arranged to directly drive the sprockets 4 at the back end of the machine 1. In an alternative embodiment, the drive shafts may drive the track elements, for example via a final drive arrangement engaging the upper part of the track 9 near the drive sprockets 4 at the rear end 6 of the machine 1. The traction device 2 may also have other drive means than tracks 9. In another embodiment, the traction device 2 may for example be arranged to include drive support beams generally extending front to back along the frame 3 and carrying wheels having tires (not shown), such as is the case in a motor grader.

The machine 1 may include a suspension system 10 that interconnects front parts 11 of the opposing traction devices 2 to the frame 3 of the machine 1. The suspension system 10 may include an equalizer bar 13. The equalizer bar 13 may be connected pivotally to the machine frame 3 about an axis 14 that extends longitudinal to the frame 3, so that it allows a rocking movement of the front parts 11 of the traction devices 2. This may be realized via a pivot connection 12. The pivot connection 12 may, for example, be a hinge, but may also be any other type of pivot arrangement, such as a ball joint. Rear parts 15 of the traction devices 2 may likewise be pivotally connected to the machine frame 3 about an pivot axle that extends laterally to the frame 3, so that the traction devices 2 may oscillate about a lateral axis 16 through the pivot axle when the front parts 11 perform a rocking movement about the longitudinal axis 14. Such pivot axle may coincide with the drive shafts, for example when the sprockets 4 at the rear end 6 of the machine 1 are driven directly by the drive shafts. In another embodiment, such a pivot axle may be a separate component extending between the frame 3 of the machine 1 and the track roller frame 7 or support beam, for example in an embodiment with a final drive arrangement engaging the upper part of the track 9 near the drive sprockets 4 at the rear end 6 of the machine 1. The equalizer bar 13 may couple the front parts 11 of the traction devices 2 via connections 27 that allow a degree of movement, but yet withstand severe loading. Such a connection 27 may for example include a pin associated with the equalizer bar 13, and a fastener extending through both the pin and the frame 3.

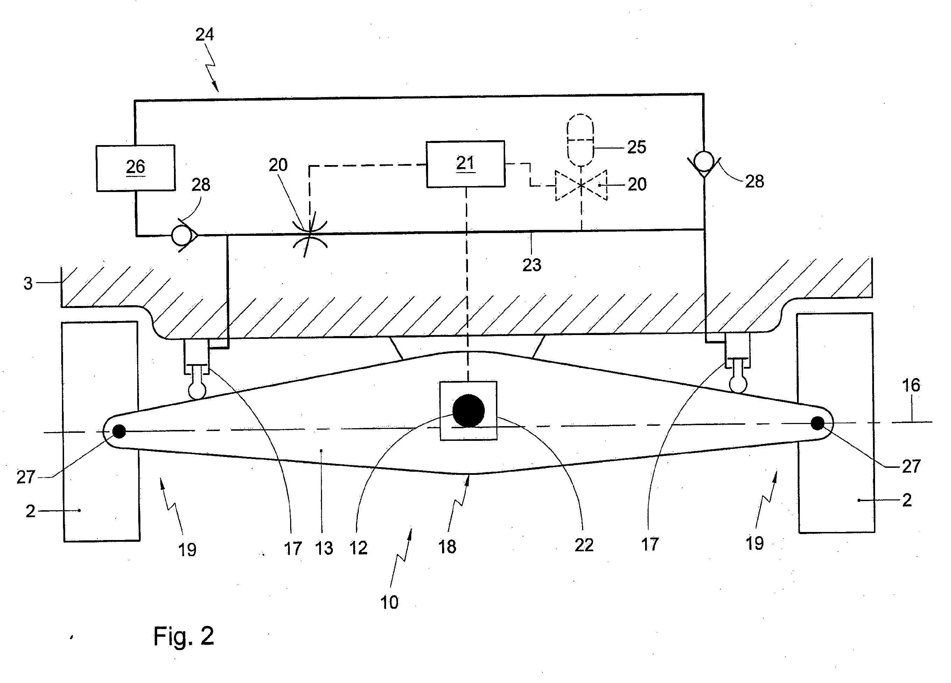

The suspension system 10 may include at least one hydraulic component acting between the frame 3 and the equalizer bar 13. The number of hydraulic components may vary, as well as the type of hydraulic component. The hydraulic component may for example, be embodied as a hydraulic motor that would at least partially form the pivot connection 12 between the equalizer bar 13 and the frame 3. In another embodiment, the hydraulic component may be a hydraulic actuator 17. In the remainder of this section and in the following section, the hydraulic component shall be referred to as hydraulic actuator 17. However, it shall be clear that the hydraulic component may also be embodied as another type of hydraulic component than a hydraulic actuator For example, in one embodiment, the hydraulic component may be a hydraulic motor as discussed above. In another embodiment, the hydraulic component may be an accumulator. The hydraulic actuator 17 may embody a linear hydraulic cylinder. Such a hydraulic cylinder may in one embodiment be a single action cylinder, but may in another embodiment for example be a double action cylinder. In the exemplary disclosed system of Fig. 2, there may be two hydraulic actuators 17, which may be embodied as linear hydraulic cylinders. The two hydraulic actuators 17 may each act on the equalizer bar 13 between a central portion 18, which may be pivotally connected to the frame 3, and an end portion 19, which may be connected to the traction device 2. In such an arrangement, the hydraulic actuators 17 may not only act oppositely to influence rocking movement about longitudinal axis 14, but may also act jointly to counter bending movement of the equalizer bar 13 about longitudinal axis 14. Such bending movement may cause the end portions 19 of the equalizer bar 13 to move out of line with the central portion 18 of the equalizer bar 13, which would result in pitch of the machine 1. This shall be discussed further in the next section.

The suspension system 10 may further include at least one valve 20. The valve 20 may be fluidly connected to the at least one actuator 17, for example via hydraulic lines 23 of a hydraulic circuit 24. In the exemplary embodiment of Fig. 2, the valve 20 may be arranged in a hydraulic line 23 that interconnects the two hydraulic actuators 17. The valve 20 may be of any type, for example an on/off valve, a ball valve, a solenoid valve or a restrictor. In the exemplary disclosed embodiment of Fig. 2, the valve 20 may be an electro-hydraulic restrictor. The valve 20 may be arranged to influence hydraulic flow continuously, stepwise or in a binary fashion. As shall be discussed in the next section, the valve 20 may be controlled to influence fluid flow to the hydraulic actuator 17 in order to selectively allow movement of the equalizer bar 13 relative to the frame 3. The valve 20 may be operated mechanically, electrically, hydraulically and/or pneumatically. In case of a mechanically operated valve 20, there may, for example, be provided a mechanical linkage to operate a ball type valve 20, or an electronic slave control arrangement. However, the valve 20 may also be operated via a controller 21.

The controller 21 may, for example include a logic circuit or computer that may be operatively connected to an electrically controlled valve 20. In the exemplary disclosed embodiment of Fig. 2, the controller 21 may be a computer, which may for example be part of a hydraulics management system of the machine 1, and the valve 20 may be an electrically controlled restrictor. The suspension system 10 may further include at least one sensor 22, generating an input signal for the controller 21 that is indicative of movement of the equalizer bar 13 relative to the frame 3, so that the controller 21 may operate the valve 20 based on a movement value represented by said input signal. Depending on the degree of accuracy that is desired, the sensor 22 may be of various types. The sensor 22 may, for example, be one of a displacement sensor, an acceleration sensor and an inclinometer. In one embodiment, a displacement sensor may for example be embodied as a linear displacement sensor arranged in a linear hydraulic actuator 17 acting between the equalizer bar 13 an the frame 3 that measures the distance or displacement of the equalizer bar 13 relative to the frame 3. In another embodiment, a displacement sensor may for example be embodied as an angular displacement sensor arranged in the connection between the rear part 15 of the traction device 2 and the frame 3 that measures the angle or angular displacement of the traction device 2 relative to the frame 3. In another embodiment, a displacement sensor may be embodied as an angular displacement sensor arranged in the pivotable connection 12 between the equalizer bar 13 and the frame 3. In another embodiment, an acceleration sensor may be embodied as an angular acceleration sensor arranged in a hydraulic motor in the pivotable connection 12 between the equalizer bar 13 and the frame 3, measuring the angular acceleration of the equalizer bar 13 relative to the frame 3. In yet another embodiment, an inclinometer may be embodied as a gyroscopic inclinometer supported on the frame 3 of the machine 1, measuring the angle of the machine frame 3 relative to the ground. Further, the number of sensors 22 may vary. The sensors 22 may be preferably placed relatively high above the ground, so that they may be shielded from dirt and debris. In the exemplary disclosed embodiment shown in Fig. 2, a single sensor 22 embodied as an angular displacement sensor or a gyroscope based inclinometer may for example be located at the central portion 18 of the equalizer bar 13 or in the pivot connection 12. However, sensors 22 may also be placed in other locations. The suspension system 10 may include at least one hydraulic accumulator 25 to dampen movement of the equalizer bar 13 relative to the frame 3, and/or to store hydraulic energy of the hydraulic circuit 24. A hydraulic accumulator 25 may be used in addition to a hydraulic actuator 17, or in stead of a hydraulic accumulator 25. For example, as shown in dotted lines in Fig. 2, a single hydraulic accumulator 25 may be used in addition to the hydraulic actuators 17 to dampen the movement of the equalizer bar 13 relative to the frame 3 when the valve 20 allows flow of hydraulic fluid. In another embodiment, a pair of hydraulic accumulators may be arranged in lieu of the hydraulic actuators 17 shown in Fig. 2 (not shown). In such a configuration, the hydraulic accumulators may be mechanically coupled between the equalizer bar 13 and the frame 3 to act as hydraulic components 17. The suspension system 10 may also include a pressure supply 26, for example a hydraulic pump. In the exemplary embodiment of Fig. 2, the pressure supply 26 may be connected via hydraulic lines 23 to the hydraulic actuators 17. Check valves 28 may be included in the hydraulic lines 23 to keep the hydraulic actuators 17 pressurized.

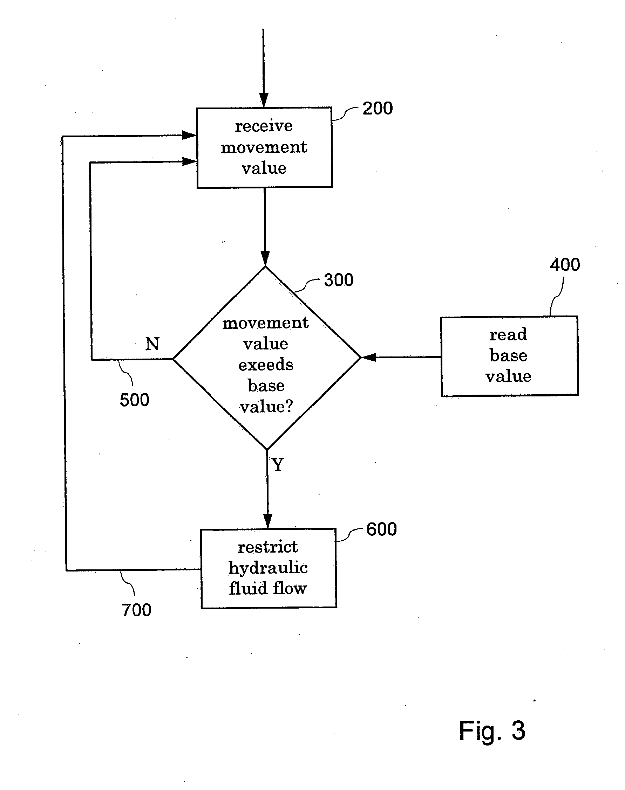

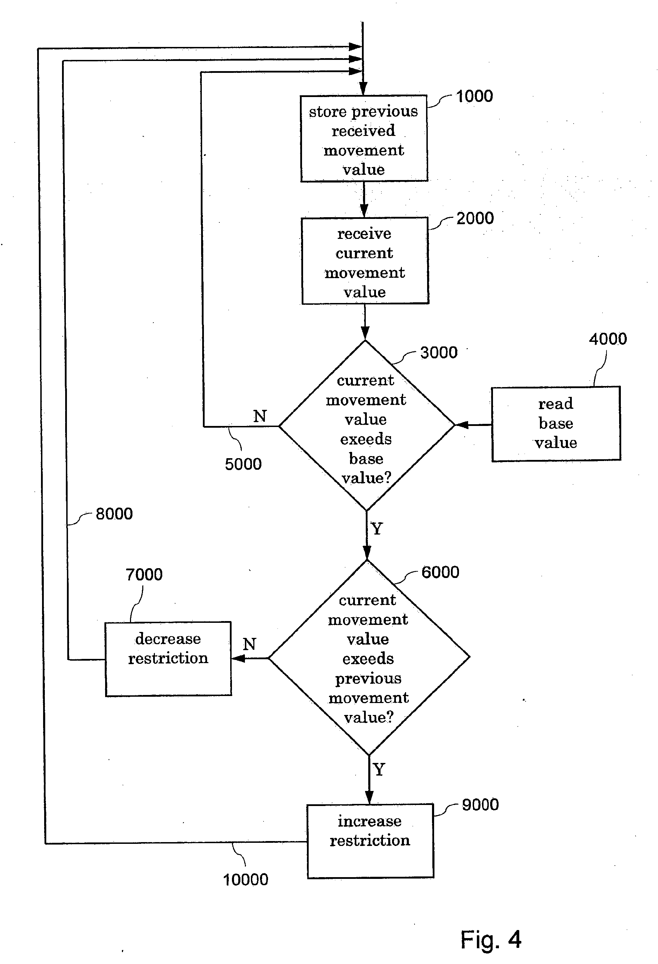

Fig. 3 and Fig. 4 illustrate an exemplary method of operating the suspension system 10.
Fig. 3 and Fig. 4 shall be discussed in the next section.

### Industrial Applicability

The disclosed suspension system 10 may be used in any type of mobile machine to suspend traction devices 2 onto a machine frame 3, such that it may switch easily between a rockable or fixed configuration. The disclosed machine suspension system 10 may operate as follows. To move the machine 1, the traction devices 2 may be driven in a conventional way. That is, in the machine 1 of the exemplary disclosed embodiment of Fig. 1 and Fig. 2, the sprockets 4 may engage the track elements 8 so that the opposing drive tracks 9 move forward or backward on the track roller frames 7. The drive tracks 9 engage the ground, and the machine 1 moves. If the speed and direction of movement of both drive tracks 9 are the same, the machine 1 moves straight, for example forward or backward. If the speed or direction of both drive tracks 9 differs, the machine 1 moves along a curve or pivots without travel. During operation, the pressure supply 26 pressurizes hydraulic fluid in hydraulic lines 23 of the hydraulic circuit 24 of the suspension system 10.

When the machine 1 is on smooth solid ground, for example during road transportation or during a finishing operation, no movement of the traction devices 2 relative to the frame 3 about the longitudinal axis 14 may be desired. In this situation, the flow of fluid in the hydraulic circuit 24 of the suspension system 10 may be influenced such that the hydraulic actuator 17 acting between the frame 3 and the equalizer bar 13 inhibits movement of the equalizer bar 13 relative to the frame 3.
In the exemplary disclosed embodiment of Fig. 2, this may be achieved by controller 21 regulating the valve 20 to block hydraulic fluid flow in the hydraulic line 23 that extends between the hydraulic actuators 17. This blockage may lock up the hydraulic circuit 24, and the hydraulic actuators 17 acting on the equalizer bar 13 between the central portion 18 and the end portions 19 may prevent rocking movement of the equalizer bar 13 about longitudinal axis 14. The locking of hydraulic circuit 24 places machine 1 in a rigid configuration, in which the traction devices 2 may be rigidly coupled to the frame 3. Such a rigid coupling may simplify operation of the machine 1, and may reduce vibration.

When the machine 1 is on uneven soil, the controller 21 may regulate the valve 20 to allow a flow of hydraulic fluid to the hydraulic actuator 17 or between paired hydraulic actuators 17. In this configuration, the hydraulic actuator 17 may allow rocking movement of the equalizer bar 13 about longitudinal axis 14. In the exemplary disclosed embodiment of Fig. 1 and Fig. 2, the controller 21 may regulate the restrictor valve 20 to allow hydraulic fluid flow in the hydraulic line 23 that extends between the hydraulic actuators 17. The hydraulic fluid flow through the hydraulic circuit 24 may allow movement of the hydraulic actuators 17 acting on the equalizer bar 13 between the central portion 18 and the end portions 19, so that rocking movement of the equalizer bar 13 about longitudinal axis 14 may take place. The front parts 11 of the traction devices 2 that are connected to the end portions 19 of the equalizer bar 13 via connections 27 may follow the rocking movement. In doing so, the rear parts 15 of the traction devices 2 that are pivotally connected to the machine frame 3 may oscillate about the lateral axis 16. In the rockable configuration, the traction devices 2 may rock relative to the frame 3 and may follow the soil on uneven terrain. By allowing traction devices 2 to follow the terrain, the productivity of the machine 1 may be maintained, even under rough soil conditions.

By influencing the flow of hydraulic fluid in the suspension system 10, the machine 1 may be switched easily between locked and rockable configurations. The flow of hydraulic fluid may be influenced in a binary fashion, such that movement of the equalizer bar 13 may either be allowed or disallowed. However, the flow may also be influenced stepwise or continuously, for example to allow various degrees of dampened movement. When a pair of hydraulic actuators 17 is arranged such that each hydraulic actuator 17 acts between a central portion 18 and end portion 19 of the of the equalizer bar 13, the hydraulic actuators 17 may also prevent bending movement of the equalizer bar 13 about the longitudinal axis 14. A reduction of such bending movement may keep the end portions 19 of the equalizer bar 13 more on a straight line with the central portion 18 of the equalizer bar 13, which may help to reduce pitch of the machine 1 during travel. Especially when driving the machine 1 on soil with close ridges, for example so called washboards, or when the machine 1 is driven on the road, heavy machine pitch may thus be prevented, which may significantly reduce machine vibration. This may increase operator comfort and reduce wear on the machine 1. If the flow of hydraulic fluid is influenced incrementally or continuously, the suspension system 10 may then provide the operator with a form of ride control.

The hydraulic actuators 17 may be pressurized using a pressure supply 26 that feeds hydraulic fluid to the hydraulic circuit 24. Check valves 28 included in the hydraulic lines 23 may prevent back flow of hydraulic fluid. A hydraulic accumulator 25 with a second restrictor valve 20 may be included in the hydraulic circuit 24 to dampen the movement of the equalizer bar 13 relative to the frame 3 when the restrictor valves 20 allow hydraulic fluid flow. In an embodiment in which the hydraulic component is embodied as one or more hydraulic accumulators 25 that are mechanically coupled between the equalizer bar 13 and the frame 3 in the rockable configuration, the movement of the equalizer bar 13 relatively to the frame 3 may be dampened by the hydraulic fluid flow passing through the accumulators 25. In the locked configuration, the valve 20 may prevent movement of the equalizer bar 13 relative to the frame 3 by blocking flow of hydraulic fluid.

The flow of hydraulic fluid may be influenced manually or automatically. For example, in one embodiment, an operator may adjust a valve manually through a linkage or through electronic slave control. In another embodiment, the flow may be influenced automatically using an automated controller 21 and a sensor 22 generating an input signal for the controller 21 that is indicative of movement of the equalizer 13 bar relative to the frame 3. In Fig. 3, a flow chart is depicted with an exemplary disclosed method of automatically operating the suspension system 10. When the controller 21 has been turned on, it may receive an input movement value (step 200). In one embodiment, the input movement value may for example be angular displacement of a traction device 2 relative to the frame 3. In another embodiment, the input movement value may for example be angular acceleration of the equalizer bar 13 relative to the frame 3. The controller 21 may compare the received movement value to a base value (step 300). The base value may be fixed or variable. In one embodiment, a variable base value may for example be given in by the operator. In another embodiment, a variable base value may be for example be read from an electronic map (step 400). Such an electronic map may, for example, include acceleration values that vary with changing speeds of the machine 1. Based on the comparison, the controller 21 may influence the flow of hydraulic fluid. If the input movement value does not exceed the base value, the controller 21 may take no action and may go back to receiving new input (step 500). If the input movement value exceeds the base value, the controller 21 may restrict hydraulic fluid flow via valve 20 (step 600), and may return to receiving new input (step 700). Depending on the type of valve 20, the fluid flow may be influenced stepwise or continuously. With the exemplary disclosed method, the machine 1 may switch automatically between the rockable and fixed configurations, while the switching behavior may, for example, vary depending on the speed of the machine 1.

In another embodiment of the exemplary disclosed method, the degree in which the suspension system 10 dampens the movement of the equalizer bar 13 relative to the frame 3 may be adapted automatically to the conditions at hand. An input signal indicative of increased motion may cause the controller 21 to regulate the at least one valve to restrict the flow of hydraulic fluid to the hydraulic actuator 17 so as to reduce movement of the equalizer bar 13 relative to the frame 3. An input signal indicative of decreased motion may cause the controller 21 to regulate the at least one valve to increase the flow of hydraulic fluid to the hydraulic actuator 17 so as to facilitate movement of the equalizer bar 13 relative to the frame 3. In Fig. 4 a flow chart is depicted that is similar to Fig. 3, but in which additionally any previously received input movement value may be stored (step 1000) before a current input movement value is received (step 2000). The controller 21 may compare the current input movement value to a base value (step 3000). The base value may again be fixed or variable as discussed in relation to the previous exemplary disclosed method. If the input movement value does not exceed the base value, the controller 21 may take no action and may go back to receiving new input (step 5000). If the current input value exceeds the base value, it may be compared to the previously received input movement value (step 6000). If the current input value does not exceed the previous input value, the controller 21 may decrease the restriction (step 7000), and may return to receiving new input (step 8000). If the current input movement value exceeds the previously received input value, the controller 21 may increase the restriction (step 9000), and may return to receiving new input (step 10000). The increase or decrease of the restriction may be stepwise or continuous. With the exemplary disclosed method, the controller 21 may switch the machine 1 automatically between the rockable and fixed configurations, and may additionally dampen the degree of movement of the equalizer bar 13 relative to the frame 3.

It will be apparent to those skilled in the art that various modifications and variations can be made to the suspension system of the present disclosure without departing from the scope of the disclosure. For example, the controller may also take into account other input data from the machine, such as engine rpm, hydraulic flow or the occurrence of steering action. Other embodiments will be apparent to those skilled in the art from consideration of the specification and practice of the suspension system disclosed herein. It is intended that the specification and examples be considered as exemplary only, with a true scope of invention being indicated by the following claims.

## Claims

1. A suspension system for a machine (1) having opposing traction devices (2) extending generally front to back along a frame (3) of the machine (1), the system comprising:
an equalizer bar (13) for interconnecting the opposing traction devices and to be, at a central portion (18), pivotally connected to the machine frame (3) about an axis (14) that extends longitudinally to the machine (3);
at least one hydraulic component for acting between the equalizer bar (13) and the frame (3); the at least one hydraulic component including a pair of hydraulic cylinders (17); and
at least one valve (20) fluidly connected to the at least one hydraulic component and in use controlled to influence fluid flow to the at least one hydraulic component in order to selectively allow movement of the equalizer bar (12) relative to the frame (3);
a controller (21) operatively connected to the at least one valve (20); and
at least one sensor (22) configured to generate an input signal for the controller (21) that is indicative of movement of the equalizer bar (13) relative to the frame (3),
**characterized in that** the at least one valve (20) is a variable restrictor and the input signal is adapted to cause the controller (21) to regulate the at least one valve (20) to influence fluid flow to the at least one hydraulic component incrementally or continuously, thereby controlling the degree of dampening, and
**in that** each hydraulic cylinder (17) is for acting on the equalizer bar (13) between the central portion (18) and an end portion (19) that is to be connected to a drive support beam.

2. The suspension system of claim 1, wherein the traction devices (2) are arranged to carry drive tracks (9).

3. The suspension system of claim 1, wherein the at least one hydraulic component includes an accumulator (25).

4. The suspension system of claim 1, wherein the at least one sensor (22) is one of a displacement sensor, an acceleration sensor and an inclinometer.

5. A machine, comprising:
a machine frame (3);
two opposing drive tracks (9) extending along the machine frame (3); and
a suspension system according to any of claims 1 - 4,
wherein the equalizer bar (13) operatively couples front parts (11) of the opposing drive tracks (9).

6. The machine of claim 5, in which rear parts (15) of the drive tracks (9) are pivotally coupled to the machine frame (3) about an axis (16) that extends laterally to the machine frame (3).

7. The machine of claim 5, wherein an input signal indicative of increased motion causes the controller (21) to regulate the at least one valve (20) to restrict fluid flow to the at least one hydraulic component in order to reduce movement of the equalizer bar (13) relative to the frame (3),

8. The machine of claim 5, wherein an input signal indicative of decreased motion causes the controller (21) to regulate the at least one valve (20) to increase fluid flow to the at least one hydraulic component in order to facilitate movement of the equalizer bar (13) relative to the frame (3).

9. A method of controlling a suspension system of a machine (1) according to claim 1, the method comprising:
receiving a signal indicative of movement of the equalizer bar relative to the frame;
comparing a value of the signal with a base value; and
influencing a flow of hydraulic fluid in the suspension system based on the comparison to selectively allow movement of the equalizer bar (13) relative to the frame (3),
**characterized in that** the flow of the hydraulic fluid is influenced stepwise or continuously.

## Patentansprüche

1. Aufhängungssystem für eine Maschine (1) mit entgegengesetzten Zugvorrichtungen (2), die allgemein von vorne nach hinten entlang eines Rahmens (3) der Maschine (1) verlaufen, wobei das System folgendes umfasst:
einen Querträger (13) zum Verbinden der entgegengesetzten Zugvorrichtungen und um an einem zentralen Abschnitt (18) drehbar mit dem Maschinenrahmen (3) um eine längs zu der Maschine (3) verlaufende Achse (14) verbunden zu werden;
mindestens ein Hydraulikbauteil zum Einwirken zwischen dem Querträger (13) und dem Rahmen (3), wobei das mindestens eine Hydraulikbauteil ein Paar Hydraulikzylinder (17) aufweist; und
mindestens ein Ventil (20), in Flüssigkeitsverbindung mit dem mindestens einen Hydraulikbauteil und bei Verwendung gesteuert, um den Flüssigkeitsfluss zu dem mindestens einen Hydraulikbauteil so zu beeinflussen, dass eine selektive Bewegung des Querträgers (12) zu dem Rahmen (3) möglich ist;
eine Steuereinrichtung (21), betrieblich mit dem mindestens einen Ventil (20) verbunden; und
mindestens einen Sensor (22), konfiguriert zum Erzeugen eines Eingangssignals für die Steuereinrichtung (21), das auf die Bewegung des Querträgers (13) zu dem Rahmen (3) hinweist,
**dadurch gekennzeichnet, dass** das mindestens eine Ventil (20) ein variables Drosselventil ist und das Eingangssignal geeignet ist, um die Steuereinrichtung (21) zu veranlassen, das mindestens eine Ventil (20) so zu regeln, dass der Flüssigkeitsfluss zu dem mindestens einen hydraulischen Bauteil schrittweise oder kontinuierlich beeinflusst wird, wodurch der Grad der Befeuchtung gesteuert wird, und
dass jeder Hydraulikzylinder (17) dazu dient, auf den Querträger (13) zwischen dem zentralen Abschnitt (18) und einem Endabschnitt (19), der mit einem Antriebsstützträger zu verbinden ist, einzuwirken.

2. Aufhängungssystem nach Anspruch 1, wobei die Zugvorrichtungen (2) zum Tragen von Antriebsspuren (9) geeignet sind.

3. Aufhängungssystem nach Anspruch 1, wobei das mindestens eine Hydraulikbauteil einen Akkumulator (25) umfasst.

4. Aufhängungssystem nach Anspruch 1, wobei der mindestens eine Sensor (22) ein Verschiebungssensor, ein Beschleunigungssensor oder ein Neigungsmesser ist.

5. Maschine, umfassend:
einen Maschinenrahmen (3);
zwei entgegengesetzte Antriebsspuren (9), die am Maschinenrahmen (3) entlang verlaufen; und
ein Aufhängungssystem nach einem der Ansprüche 1-4,
wobei der Querträger (13) die vorderen Teile (11) der entgegengesetzten Antriebsspuren (9) betrieblich koppelt.

6. Maschine nach Anspruch 5, wobei die hinteren Teile (15) der Antriebsspuren (9) drehbar um eine Achse (16), die lateral zu dem Maschinenrahmen (3) verläuft, an den Maschinenrahmen (3) gekoppelt sind.

7. Maschine nach Anspruch 5, wobei ein Eingangssignal, das auf zunehmende Bewegung hinweist, die Steuereinrichtung (21) dazu veranlasst, das mindestens eine Ventil (20) so zu regeln, dass der Flüssigkeitsfluss zu dem mindestens einen Hydraulikbauteil begrenzt wird, um die Bewegung des Querträgers (13) zu dem Rahmen (3) zu vermindern.

8. Maschine nach Anspruch 5, wobei ein Eingangssignal, das auf abnehmende Bewegung hinweist, die Steuereinrichtung (21) dazu veranlasst, das mindestens eine Ventil (20) so zu regeln, dass der Flüssigkeitsfluss zu dem mindestens einen Hydraulikbauteil erhöht wird, um die Bewegung des Querträgers (13) zu dem Rahmen (3) zu erleichtern.

9. Verfahren zur Steuerung eines Aufhängungssystems einer Maschine (1) nach Anspruch 1, umfassend:
das Empfangen eines Signals, das auf die Bewegung des Querträgers zu dem Rahmen hinweist;
das Vergleichen eines Werts des Signals mit einem Basiswert; und
das Beeinflussen eines Hydraulikflüssigkeitsflusses in dem Aufhängungssystem basierend auf dem Vergleich, um selektiv die Bewegung des Querträgers (13) relativ zu dem Rahmen (3) zu ermöglichen,
**dadurch gekennzeichnet, dass** der Hydraulikflüssigkeitsfluss schrittweise oder kontinuierlich beeinflusst wird.

## Revendications

1. Système de suspension pour une machine (1) ayant des dispositifs de traction opposés (2) s'étendant globalement de l'avant vers l'arrière le long d'un bâti (3) de la machine (1), le système comprenant ;
une barre d'équilibrage (13) pour interconnecter les dispositifs de traction opposés et pour être, en une partie centrale (18), connectée à pivotement au bâti (3) de machine autour d'un axe (14) qui s'étend longitudinalement à la machine (3) ;
au moins un composant hydraulique pour agir entre la barre d'équilibrage (13) et le bâti (3) ; l'au moins un composant hydraulique incluant une paire de vérins hydrauliques (17) ; et
au moins une soupape (20) connectée fluidiquement à l'au moins un composant hydraulique et commandée en utilisation pour influencer l'écoulement de fluide vers l'au moins un composant hydraulique afin de permettre sélectivement un déplacement de la barre d'équilibrage (12) relativement au bâti (3) ;
une commande (21) connectée fonctionnellement à l'au moins une soupape (20) ; et
au moins un capteur (22) configuré pour générer un signal d'entrée pour la commande (21) qui est indicatif d'un mouvement de la barre d'équilibrage (13) relativement au bâti (3),
**caractérisé en ce que** l'au moins une soupape (20) est un dispositif de restriction d'écoulement variable et le signal d'entrée est adapté pour provoquer la régulation par la commande (21) de l'au moins une soupape (20) pour influencer l'écoulement de fluide vers l'au moins un composant hydraulique de manière incrémentale ou continue, commandant ainsi le degré d'amortissement, et
**en ce que** chaque vérin hydraulique (17) est destiné à agir sur la barre d'équilibrage (13) entre la partie centrale (18) et une partie d'extrémité (19) qui est destinée à être reliée à une poutre de support d'entraînement.

2. Système de suspension selon la revendication 1, dans lequel les dispositifs de traction (2) sont agencés pour supporter des chenilles motrices (9).

3. Système de suspension selon la revendication 1, dans lequel l'au moins un composant hydraulique inclut un accumulateur (25).

4. Système de suspension selon la revendication 1, dans lequel l'au moins un capteur (22) est l'un d'un capteur de déplacement, un capteur d'accélération et un inclinomètre.

5. Machine, comprenant :
un bâti (3) de machine ;
deux chenilles motrices (9) opposées s'étendant le long du bâti (3) de machine ; et
un système de suspension selon l'une quelconque des revendications 1-4,
dans lequel la barre d'équilibrage (13) couple fonctionnellement des parties avant (11) des chenilles motrices (9) opposées.

6. Machine selon la revendication 5, dans laquelle des parties arrière (15) des chenilles motrices (9) sont couplées à pivotement au bâti (3) de machine autour d'un axe (16) qui s'étend latéralement au bâti (3) de machine.

7. Machine selon la revendication 5, dans laquelle un signal d'entrée indicatif d'un mouvement augmenté provoque la régulation par la commande (21) de l'au moins une soupape (20) pour limiter l'écoulement de fluide vers l'au moins un composant hydraulique afin de réduire le déplacement de la barre d'équilibrage (13) relativement au bâti (3).

8. Machine selon la revendication 5, dans laquelle un signal d'entrée indicatif d'un mouvement diminué provoque la régulation par la commande (21) de l'au moins une soupape (20) pour augmenter l'écoulement de fluide vers l'au moins un composant hydraulique afin de faciliter le déplacement de la barre d'équilibrage (13) relativement au bâti (3).

9. Procédé de commande d'un système de suspension d'une machine (1) selon la revendication 1, le procédé comprenant :
de recevoir un signal indicatif d'un déplacement de la barre d'équilibrage relativement au bâti ;
de comparer une valeur du signal avec une valeur de base ; et
d'influencer un écoulement de fluide hydraulique dans le système de suspension en fonction de la comparaison pour permettre sélectivement le déplacement de la barre d'équilibrage (13) relativement au bâti (3),
**caractérisé en ce que** l'écoulement du fluide hydraulique est influencé pas à pas ou continument.
